(19) Europäisches Patentamt / European Patent Office / Office européen des brevets

(11) EP 4 316 835 A1

(12) EUROPEAN PATENT APPLICATION
published in accordance with Art. 153(4) EPC

(43) Date of publication:
**07.02.2024 Bulletin 2024/06**

(21) Application number: **22781109.8**

(22) Date of filing: **30.03.2022**

(51) International Patent Classification (IPC):
***B32B 27/32*** (2006.01) ***B32B 27/00*** (2006.01)
***B32B 27/36*** (2006.01) ***B65D 65/40*** (2006.01)

(52) Cooperative Patent Classification (CPC):
**B32B 27/00; B32B 27/32; B32B 27/36; B65D 65/40**

(86) International application number:
**PCT/JP2022/016065**

(87) International publication number:
**WO 2022/210899 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2021 JP 2021063708**

(71) Applicant: **Otsuka Pharmaceutical Factory, Inc.**
**Naruto-shi, Tokushima 772-8601 (JP)**

(72) Inventors:
- **TOKIEDA Junji**
  **Ichihara-shi, Chiba 299-0108 (JP)**
- **INOUE Takanori**
  **Naruto-shi, Tokushima 772-8601 (JP)**
- **OTANI Shingo**
  **Naruto-shi, Tokushima 772-8601 (JP)**
- **KAJIHARA Yasuyuki**
  **Naruto-shi, Tokushima 772-8601 (JP)**
- **SHOJI Hidenari**
  **Naruto-shi, Tokushima 772-8601 (JP)**

(74) Representative: **J A Kemp LLP**
**80 Turnmill Street**
**London EC1M 5QU (GB)**

# (54) MULTILAYER FILM AND LIQUID AGENT CONTAINER

(57) Provided are a liquid agent container formed of a multilayer film using polybutylene terephthalate in an outer layer, in which it is controlled or prevented that a component derived from the polybutylene terephthalate is permeates the multilayer film and is eluted into a content liquid, and a multilayer film for forming such a liquid agent container. A multilayer film includes at least a layer (1) including polybutylene terephthalate, a layer (2) including a cyclic olefin-based polymer, a flexible layer (3) including an ethylene-based resin, and a layer (4) including a polyolefin, which are laminated, wherein the layer (1), the layer (2), and the layer (4) forming one surface of the multilayer film are laminated in this order, and a liquid agent container is formed of the multilayer film so that the layer (4) is formed as the innermost layer.

EP 4 316 835 A1

## Description

### Technical Field

The present invention relates to a multilayer film and a liquid agent container formed of the multilayer film.

### Background Art

In recent years, a medical solution bag formed of a flexible plastic film has become the mainstream of a container for containing a medical solution such as infusion. This type of medical solution bag has an advantage of being easy to handle and easy to discard. Since this type of medical solution bag comes into direct contact with the medical solution, a bag formed of a polyolefin such as polyethylene or polypropylene, whose safety has been established, is widely used.

A film for forming a liquid agent container such as a medical solution bag has been improved from various viewpoints in the conventional art.

For example, a container for containing a liquid agent such as infusion is subjected to high-pressure steam sterilization in a high temperature state, and thus, heat resistance is required. For this reason, a medical laminate film using polybutylene terephthalate in an outer layer has been proposed (Patent Literature 1).

In addition, a multilayer film using a cyclic polyolefin as an intermediate layer has also been proposed for the purpose of preventing air from entering a container from the outside through a film and moisture in the container from leaking to the outside through the film during long-term storage of a container formed of a film containing a liquid agent such as infusion, that is, for the purpose of improving gas shielding properties and moisture shielding properties (Patent Literature 2).

Furthermore, in order to provide a pharmaceutical heat-resistant container that is excellent in heat resistance, transparency, and flexibility, a pharmaceutical container or a multilayer pharmaceutical container formed of an ethylene-based resin composition whose residual crystallinity at a sterilization temperature is specified has also been proposed (Patent Literatures 3 and 4).

### Citation List

#### Patent Literature

Patent Literature 1: WO 2012/8007 A
Patent Literature 2: JP 2002-301796 A
Patent Literature 3: JP 2008-253478 A
Patent Literature 4: JP 2013-81494 A

### Summary of Invention

#### Technical Problem

As a result of intensive studies, the present inventors have found that when polybutylene terephthalate is used in an outer layer of a multilayer film for forming a liquid agent container, there is a problem that a component derived from the polybutylene terephthalate permeates the multilayer film and is eluted into a content liquid.

In view of such problems in the conventional art, a first object of the present invention is to provide a liquid agent container formed of a multilayer film using polybutylene terephthalate in one layer (for example, an outer layer), in which it is controlled or prevented that a component derived from the polybutylene terephthalate permeates the multilayer film and is eluted into a content liquid, and a multilayer film for forming such a liquid agent container.

In addition, a second object of the present invention is to provide a liquid agent container that is excellent in heat resistance, transparency, and impact resistance, and a multilayer film for forming such a liquid agent container.

#### Solution to Problem

The present invention relates to the following [1] to [9] .

[1] A multilayer film comprising at least:

a layer (1) comprising polybutylene terephthalate,
a layer (2) comprising a cyclic olefin-based polymer,
a flexible layer (3) comprising an ethylene-based resin, and
a layer (4) comprising a polyolefin, which are laminated,
wherein the layer (1), the layer (2), and the layer (4) forming one surface of the multilayer film are laminated in this order.

[2] The multilayer film according to [1], wherein the cyclic olefin-based polymer has a glass transition temperature of 80 to 145°C.
[3] The multilayer film according to [1] or [2], wherein the cyclic olefin-based polymer has a structural unit represented by the following General Formula (2):

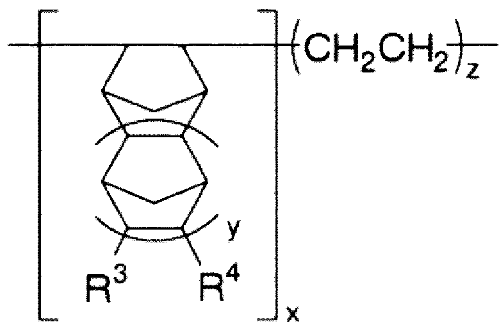

... (2)

wherein in Formula (2), $R^3$ and $R^4$ are each independently a hydrogen atom or a hydrocarbon group having 1 to 5 carbon atoms, and may be bonded to each other to form a ring,
x is an integer of 1 or more, y is an integer of 0 or 1 or more, and z is an integer of 1 or more.
[4] The multilayer film according to any one of [1] to [3], wherein in an endothermic curve obtained by differential scanning calorimetry of the ethylene-based resin, the following requirements [a], [b], and [c] are satisfied:

[a]: when t = 107°C, Ht = 55 to 75%,
[b]: when t = 121°C, Ht = 65 to 80%, and
[c]: when t = 127°C, Ht = 70 to 95%,

wherein in [a], [b], and [c], Ht is the amount of melted component calculated by an equation: $Ht = ht/\Delta Hm$ by determining the total heat of fusion ($\Delta Hm$) and a heat of fusion (ht) observed from the melting start temperature to t°C from the endothermic curve observed at the second temperature increase by heating the ethylene-based resin from -20°C to 230°C at a temperature increasing rate of 10°C/min in a nitrogen atmosphere and holding the ethylene-based resin at this temperature for 10 minutes, cooling the ethylene-based resin to 30°C at a temperature decreasing rate of 10°C/min and holding the ethylene-based resin at this temperature for 1 minute, and then, heating the ethylene-based resin to 230°C at a temperature increasing rate of 10°C/min by a differential scanning calorimeter.
[5] The multilayer film according to any one of [1] to [4], wherein the ethylene-based resin has a melt flow rate (190°C, load: 2.16 kg) of 0.01 to 10 g/10 min.
[6] The multilayer film according to any one of [1] to [5], wherein the polyolefin satisfies the following requirements [d] and [e]:

requirement [d]: the density is 0.900 to 0.960 $kg/cm^3$, and
requirement [e]: the melt flow rate (190°C, load: 2.16 kg) is 0.1 to 10 g/10 min.

[7] The multilayer film according to any one of [1] to [6], wherein the polyolefin is a mixture of polyethylene and polypropylene.
[8] The multilayer film according to any one of [1] to [7], wherein the layer (1), the layer (3), the layer (2), the layer (3), and the layer (4) are laminated in this order.
[9] A liquid agent container formed of the multilayer film according to any one of [1] to [8] so that the layer (4) is formed as the innermost layer.

Advantageous Effects of Invention

By using the multilayer film of the present invention, it is possible to produce a liquid agent container in which it is controlled or prevented that a component derived from polybutylene terephthalate permeates the multilayer film and is eluted into a content liquid while polybutylene terephthalate is used in one layer (for example, an outer layer) of the multilayer film.

Furthermore, the liquid agent container formed of the multilayer film according to [4] is particularly excellent in heat resistance, transparency, and impact resistance.

Description of Embodiments

Hereinafter, the present invention will be more specifically described.

[Multilayer Film]

The multilayer film according to the present invention includes at least:

a layer (1) including polybutylene terephthalate,
a layer (2) including a cyclic olefin-based polymer,
a flexible layer (3) including an ethylene-based resin, and
a layer (4) including a polyolefin, which are laminated,
wherein the layer (1), the layer (2), and the layer (4) forming one surface of the multilayer film are laminated in this order.

(1) Layer Including Polybutylene Terephthalate:

The layer (1) is a layer including polybutylene terephthalate.

As the polybutylene terephthalate, polybutylene terephthalate known in the conventional art can be used. Specific examples of a commercially available product include "NOVADURAN (registered trademark)" manufactured by Mitsubishi Engineering-Plastics Corporation.

The melt volume flow rate (in accordance with ISO 1133, 250°C, load: 2.16 kg) of the polybutylene terephthalate is preferably 1 to 30 $cm^3$/10 min from the viewpoint of formability of the film.

The bending elastic modulus (in accordance with ISO 178) of the polybutylene terephthalate is preferably low from the viewpoint of flexibility of the film, and is 200 to 3,000 MPa, preferably 500 to 2,000 MPa, and more preferably 500 to 1,000 MPa.

The layer (1) may contain a small amount of a component derived from polybutylene terephthalate or a component derived from, for example, 1,4-butanediol used in production of polybutylene terephthalate (for example, a compound represented by the following formula).

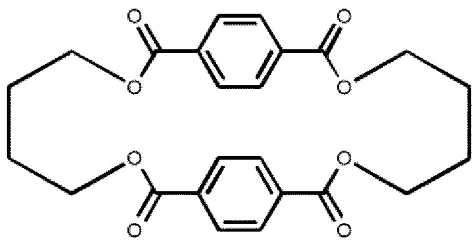

In the multilayer film of the present invention, even when the layer (1) contains such a component, permeation of such a component to a surface in contact with the liquid agent is controlled or prevented.

The thickness of the layer (1) is preferably 1 um or more from the viewpoint of stably forming the multilayer film, and is preferably 50 um or less from the viewpoint of not lowering strength of the liquid agent container formed of the multilayer film.

(2) Layer Including Cyclic Olefin-Based Polymer:

The layer (2) is a layer including a cyclic olefin-based polymer.

As the cyclic olefin-based polymer, a cyclic olefin-based polymer known in the conventional art can be used.

Specific examples thereof include a polymer having a structural unit represented by the following General Formula (1) and/or the following General Formula (2):

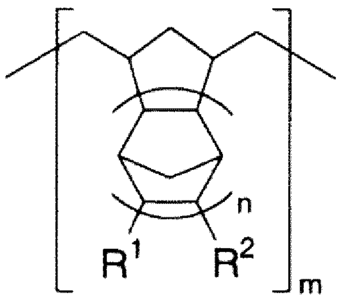

··· (1)

wherein in Formula (1), $R^1$ and $R^2$ are each independently a hydrogen atom or a hydrocarbon group having 1 to 10 carbon atoms, and may be bonded to each other to form a ring, m is an integer of 1 or more, and n is an integer of 0 or 1 or more,

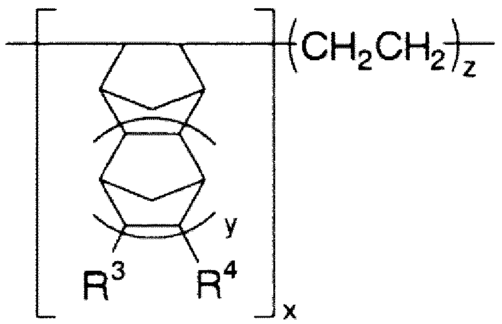

··· (2)

wherein in Formula (2), $R^3$ and $R^4$ are each independently a hydrogen atom or a hydrocarbon group having 1 to 5 carbon atoms, and may be bonded to each other to form a ring, x is an integer of 1 or more, y is an integer of 0 or 1 or more, and z is an integer of 1 or more.

General Formula (2) represents that x number of structural units derived from a cyclic olefin and z number of structural units derived from ethylene are present in the polymer, and does not always represent a block copolymer composed of a block having x number of structural units derived from a cyclic olefin and a block having z number of structural units derived from ethylene.

The polymer having a structural unit represented by General Formula (1) is a saturated polymer produced by hydrogenating a ring-opening polymer by a general hydrogenation method, the ring-opening polymer being obtained by polymerizing monomers selected from, for example,

norbornene and an alkyl and/or alkylidene substitution thereof (for example, 5-methyl-2-norbornene, 5,6-dimethyl-2-norbornene, 5-ethyl-2-norbornene, 5-butyl-2-norbornene, or 5-ethylidene-2-norbornene) (hereinafter, also referred to as a "norbornene-based monomer");

cyclopentadiene, 2,3-dihydrodicyclopentadiene, and an alkyl (for example, methyl, ethyl, propyl, and butyl) substitution thereof such as;

methanooctahydronaphthalene and an alkyl and/or alkylidene substitution thereof (for example, 6-methyl-1,4:5,8-dimethano-1,4,4a,5,6,7,8,8a-octahydronaphthalene, 6-ethyl-1,4:5,8-dimethano-1,4,4a,5,6,7,8,8a-octahydronaphthalene, or 6-ethylidene-1,4:5,8-dimethano-1,4,4a,5,6,7,8,8a-octahydronaphthalene); and

a trimer or tetramer of cyclopentadiene (for example, 4,9:5,8-dimethano-3a,4,4a,5,8,8a,9,9a-octahydro-1H-benzoindene, 5,8-methano-3a,4,4a,5,8,8a,9,9a-octahydro-1H-benzoindene, 5,8-methano-1,4,4a,4b,5,8,8a,9b-octahydro-1H-fluorene, or 4,11:5,10:6,9-trimethano-3a,4,4a,5,5a,6,9,9a,10,10a,11,11a-dodecahydro-1H-cyclopentanthracene)

by a known ring-opening polymerization method.

The polymer having a structural unit represented by General Formula (2) is a polymer obtained by copolymerizing

the norbornene-based monomer and ethylene by a known method and/or a hydrogenated product thereof, both of which are saturated polymers.

Examples of the cyclic olefin-based polymer having a structural unit represented by General Formula (1) include "ZEONOR (registered trademark)" manufactured by ZEON CORPORATION as a commercially available product.

Examples of the cyclic olefin-based polymer having a structural unit represented by General Formula (2) include "APEL (registered trademark)" manufactured by Mitsui Chemicals, Inc. and "TOPAS (registered trademark)" manufactured by TOPAS ADVANCED POLYMERS GmbH as commercially available products.

From the viewpoint of preventing permeation of an eluate derived from polybutylene terephthalate constituting the layer (1), a cyclic olefin-based polymer having a structural unit represented by General Formula (2) is particularly preferable.

A glass transition temperature (Tg) of the cyclic olefin-based polymer measured by the following method is preferably 80°C or higher and more preferably 100°C or higher from the viewpoint of preventing permeation of an eluate derived from polybutylene terephthalate constituting the layer (1), and is preferably 145°C or lower and more preferably 135°C or lower from the viewpoint of not decreasing the flexibility of the liquid agent container formed of the multilayer film.

<Method for Measuring Glass Transition Temperature>

Using a differential scanning calorimeter, about 10 mg of a sample is heated from 30°C to 200°C at a temperature increasing rate of 50°C/min in a nitrogen atmosphere, and held at this temperature for 10 minutes. Furthermore, the sample is cooled to -100°C at a temperature decreasing rate of 10°C/min, held at this temperature for 5 minutes, and then heated to 200°C at a temperature increasing rate of 10°C/min. At the second temperature increase, a DSC curve is bent due to a change in specific heat, and a baseline is sensed in a parallel movement manner. The temperature at the intersection of the tangent line of the baseline on the lower temperature side than the bending temperature and the tangent line at the point where the inclination is maximized at the bent portion is defined as a glass transition temperature (Tg).

The molecular weight of the cyclic olefin-based polymer measured by gel permeation analysis using toluene as a solvent is preferably 10,000 to 100,000 and more preferably 10,000 to 80,000.

The thickness of the layer (2) is preferably 5 um or more from the viewpoint of stably forming the multilayer film, and is preferably 20 um or less from the viewpoint of the transparency of the multilayer layer.

The layer (2) may contain a resin other than the cyclic polyolefin in order to enhance weldability with an adjacent layer. Examples of such a resin include a polyolefin used in the layer (4) including a polyolefin described below.

(3) Flexible Layer Including Ethylene-Based Resin:

The flexible layer (3) is a layer including an ethylene-based resin.

Examples of the ethylene-based resin include low-density polyethylene, linear low-density polyethylene, medium-density polyethylene, and high-density polyethylene. These ethylene-based resins may be used alone or in combination of two or more thereof.

The ethylene-based resin is preferably a mixture of high-density polyethylene and linear low-density polyethylene from the viewpoint of heat resistance, transparency, and impact resistance. A value of (mass of high-density polyethylene)/(mass of linear low-density polyethylene) in the mixture is, for example, 95/5 to 5/95, and preferably 10/90 to 50/50. In addition, the high-density polyethylene in the mixture is preferably an ethylene homopolymer.

Examples of the method for producing these ethylene-based resins include a slurry method, a solution method, and a gas phase method. When the ethylene-based resin is produced by these methods, examples of an olefin polymerization catalyst to be used include a magnesium chloride-supported titanium catalyst, a Phillips catalyst, and a metallocene catalyst.

The density of the ethylene-based resin is preferably 955 to 900 $kg/m^3$ and more preferably 930 to 905 $kg/m^3$.

In addition, the melt flow rate (in accordance with ASTM D1238, 190°C, load: 2.16 kg) of the ethylene-based resin is preferably 0.01 to 10 g/10 min and more preferably 0.1 to 2 g/10 min.

In an endothermic curve obtained by differential scanning calorimetry of the ethylene-based resin, the following requirements [a], [b], and [c] are preferably satisfied.

[a]: when t = 107°C, Ht = 55 to 75%.
[b]: when t = 121°C, Ht = 65 to 80%.
[c]: when t = 127°C, Ht = 70 to 95%.

In [a], [b], and [c], Ht is the amount of melted component calculated by an equation: Ht = ht/ΔHm by determining the total heat of fusion (ΔHm) and a heat of fusion (ht) observed from the melting start temperature to t°C from the endothermic

curve observed at the second temperature increase by heating the ethylene-based resin from -20°C to 230°C at a temperature increasing rate of 10°C/min in a nitrogen atmosphere and holding the ethylene-based resin at this temperature for 10 minutes, cooling the ethylene-based resin to 30°C at a temperature decreasing rate of 10°C/min and holding the ethylene-based resin at this temperature for 1 minute, and then, heating the ethylene-based resin to 230°C at a temperature increasing rate of 10°C/min by a differential scanning calorimeter.

When the ethylene-based resin satisfies the requirements [a], [b], and [c], a liquid agent container formed of the multilayer film of the present invention does not cause deformation such as large wrinkles even when being sterilized under a high temperature condition of 121°C, has sufficient heat resistance, has a high transmittance of 55% or more at a wavelength of 450 nm as measured by Ultraviolet-Visible absorption spectroscopy described in Transparency Test Method 1 of Japanese Pharmacopoeia (17th revision) after sterilization, further prevents leakage of a content solution due to falling bag, and is excellent in impact resistance.

The ethylene-based resin satisfying the requirements [a], [b], and [c] can be produced, for example, by appropriately adjusting, for example, a ratio of the high-density polyethylene and the linear low-density polyethylene, and the density or the melting point of the linear low-density polyethylene, when producing a mixture of the high-density polyethylene and the linear low-density polyethylene described above.

The thickness of the flexible layer (3) is preferably 5 um or more from the viewpoint of stably forming the multilayer film, and is preferably 200 um or less from the viewpoint of the transparency of the multilayer layer.

(4) Layer Including Polyolefin:

The layer (4) is a layer including a polyolefin. However, the layer (4) usually contains neither polybutylene terephthalate nor a cyclic olefin-based polymer.

As the polyolefin, a polyolefin used in the conventional art in the innermost layer of the liquid agent container formed of a multilayer film can be used.

Examples of the polyolefin include an ethylene-based polymer and a propylene-based polymer.

The polyolefin may be various polyolefins, for example, a mixture of the ethylene-based polymer and the propylene-based polymer.

The density (in accordance with ASTM D1505, 23°C) of the polyolefin is, for example, 900 to 960 kg/$m^3$, and preferably 920 to 950 kg/$m^3$ (requirement [d]).

The melt flow rate (in accordance with ASTM D1238, 190°C, load: 2.16 kg) of the polyolefin is, for example, 0.1 to 10 g/10 min, and preferably 1 to 10 g/10 min (requirement [e]).

Examples of the ethylene-based polymer include HI-ZEX (registered trademark) 65150B and ULTZEX (registered trademark) 4020B (all manufactured by Prime Polymer Co., Ltd.) as commercially available products.

Examples of the propylene-based polymer include Prime Polypro (registered trademark) J102WA (manufactured by Prime Polymer Co., Ltd.) as a commercially available product.

The ethylene-based polymer is a polymer whose main structural unit is a structural unit derived from ethylene (hereinafter, referred to as an "ethylene unit"). Examples of the ethylene-based polymer include an ethylene homopolymer and an ethylene-$\alpha$-olefin random copolymer having a small amount, for example, 10 mol% or less, and preferably 5 mol% or less of structural unit(s) derived from $\alpha$-olefin(s) having 3 to 20 carbon atoms.

The melt flow rate (in accordance with ASTM D1238, 190°C, load: 2.16 kg) of the ethylene-based polymer is, for example, 0.1 to 20 g/10 min, and preferably 1 to 10 g/10 min.

The density (in accordance with ASTM D1505, 23°C) of the ethylene-based polymer is, for example, 900 to 960 kg/$m^3$, and preferably 920 to 950 kg/$m^3$.

The propylene-based polymer is a polymer whose main structural unit is a structural unit derived from propylene (hereinafter, referred to as a "propylene unit"). Examples of the propylene-based polymer include a propylene homopolymer and a propylene-$\alpha$-olefin random copolymer having a small amount, for example, 10 mol% or less, and preferably 5 mol% or less of structural unit(s) derived from $\alpha$-olefin(s) having 2 or 4 to 20 carbon atoms.

The melt flow rate (in accordance with ASTM D1238, 230°C, load: 2.16 kg) of the propylene-based polymer is, for example, 0.1 to 20 g/10 min, and preferably 1 to 10 g/10 min.

The thickness of the layer (4) is preferably 5 um or more from the viewpoint of stably forming the multilayer film, and is preferably 50 um or less from the viewpoint of the transparency of the multilayer layer.

(Multilayer Film)

In the multilayer film according to the present invention, at least the layer (1), the layer (2), the flexible layer (3), and the layer (4) are laminated, and the layer (1), the layer (2), and the layer (4) forming one surface of the multilayer film are laminated in this order.

By using the multilayer film of the present invention, it is possible to produce a liquid agent container in which

it is controlled or prevented that a component derived from polybutylene terephthalate permeates the multilayer film and is eluted into a content liquid while polybutylene terephthalate is used in one layer (for example, an outer layer) of the multilayer film. In addition, the multilayer film of the present invention is also particularly excellent in heat resistance, transparency, and impact resistance when the flexible layer (3) satisfies the requirements [a], [b], and [c].

Examples of the layer configuration of the multilayer film of the present invention include a configuration in which the layer (1), the layer (2), the flexible layer (3), and the layer (4) are laminated in this order, and a configuration in which the layer (1), the flexible layer (3), the layer (2), the flexible layer (3), and the layer (4) are laminated in this order. Among these configurations, from the viewpoint of improving the strength of the liquid agent container formed of the multilayer film according to the present invention, the configuration in which the layer (1), the flexible layer (3), the layer (2), the flexible layer (3), and the layer (4) are laminated in this order is preferable.

A film formed of a resin such as polyethylene terephthalate, polyethylene naphthalate, polyamide, polypropylene, polyethylene, or an ethylene-vinyl alcohol copolymer, a film obtained by vapor-depositing, for example, an inorganic oxide on the film formed of these resins, or a metal foil such as aluminum may be laminated on a surface of the multilayer film according to the present invention opposite to the layer (4) forming one surface of the multilayer film.

An adhesive layer for enhancing adhesiveness between layers may be provided between adjacent layers. For example, the layer (1) and the flexible layer (3) may be adjacent to each other with the adhesive layer interposed therebetween. The adhesive layer may be a layer including an adhesive resin.

The thickness of the multilayer film according to the present invention is appropriately set according to the application, for example, in a case of forming a liquid agent container formed of the multilayer film according to the present invention, according to the strength and flexibility required for the liquid agent container, the thickness of the multilayer film is usually 100 to 300 μm, and preferably 100 to 200 μm.

(Method for Producing Multilayer Film)

The multilayer film according to the present invention can be produced by a conventionally known method except that the materials described above are used as the materials of the respective layers, for example, a water-cooled or air-cooled co-extrusion inflation method, a co-extrusion T-die method, a dry lamination method, or an extrusion lamination method. Among these methods, a water-cooled co-extrusion inflation method and a co-extrusion T-die method are preferable from the viewpoint of transparency and hygiene.

[Liquid Agent Container]

The liquid agent container of the present invention is formed of the multilayer film of the present invention described above so that the layer (4) is formed as the innermost layer, that is, so that the layer (4) is a surface to be contacted with contents.

According to the liquid agent container of the present invention, while polybutylene terephthalate is used in one layer (for example, the outer layer) of the multilayer film forming the liquid agent container, it is controlled or prevented that the component derived from polybutylene terephthalate permeates the multilayer film and is eluted into the content liquid. In addition, the liquid agent container of the present invention is also particularly excellent in heat resistance, transparency, and impact resistance when the flexible layer (3) satisfies the requirements [a], [b], and [c].

The liquid agent container of the present invention can be produced by superposing the layers (4) of two multilayer films of the present invention on each other and performing thermocompression bonding on peripheral edges thereof.

In addition, for example, the multilayer film of the present invention can also be formed by forming the multilayer film of the present invention into a bag shape by an inflation method so that the layer (4) is formed as a surface in contact with the contents, and performing thermocompression bonding on peripheral edges of the obtained bag-shaped multilayer film of the present invention.

As conditions for the thermocompression bonding, for example, the temperature is preferably 130 to 200°C, and more preferably 150 to 180°C, the pressure is preferably 0.1 to 0.8 MPa, and more preferably 0.15 to 0.5 MPa, and the pressurization time is preferably 1 to 5 seconds, and more preferably 1.5 to 3 seconds.

The liquid agent container of the present invention may be provided with a cylindrical member as a member for allowing a liquid agent such as a medical solution contained inside the liquid agent container to flow out to the outside of the liquid agent container or allowing the medical solution to flow from the outside of the liquid agent container to the inside of the liquid agent container.

Furthermore, the liquid agent container of the present invention may be a multi-chamber container in which an easily-peelable seal portion is formed and the seal is peeled off at the time of use to mix the contents.

As the method in a case of sterilizing the liquid agent container of the present invention, a method performed in the conventional art can be applied, and examples thereof include a method including putting a medical solution and

other contents in the liquid agent container, sealing the liquid agent container, and then sterilizing the liquid agent container.

Examples of a sterilization treatment method include known heat sterilization methods such as high-pressure steam sterilization and hot water shower sterilization.

The sterilization treatment temperature in the heat sterilization treatment is generally about 105 to 110°C. The sterilization treatment temperature may be set to 118 to 121°C in accordance with the type, usage, and use environment of the medical solution. When the flexible layer (3) satisfies the requirements [a], [b], and [c] described above, the liquid agent container of the present invention is particularly excellent in heat resistance, and does not undergo deformation such as large wrinkles even when sterilized at 121°C.

Examples

Hereinafter, the present invention will be described in more detail based on Examples, but the present invention is not limited to these Examples.

<Method for Measuring Resin Physical Properties>

Physical properties of resins used in Examples, for example, were measured by the following methods.

[Melt Flow Rate (MFR)]

The melt flow rate was measured in accordance with ASTM D1238E at a load of 2.16 kg. The measurement temperature was 190°C or 230°C.

[Density]

The density was measured at 23°C according to ASTM D1505.

[Melting Point (Tm) and Amount of Melted Component (Ht)]

Using a differential scanning calorimeter (DSC-7, manufactured by PerkinElmer Co., Ltd.), about 5 mg of a sample was packed in an aluminum pan, heated from -20°C to 230°C at a temperature increasing rate of 10°C/min in a nitrogen atmosphere, and held at this temperature for 10 minutes. Next, the sample was cooled to 30°C at a temperature decreasing rate of 10°C/min, held at this temperature for 1 minute, and then heated to 230°C at a temperature increasing rate of 10°C/min.

Furthermore, in an endothermic curve observed at the second temperature increase described above, the total heat of fusion (ΔHm) and the heat of fusion (ht) observed from the melting start temperature to t°C were measured, and the amount of melted component (Ht) was calculated by the following equation.

$$Ht = ht/\Delta Hm$$

<Resin Used>

In Examples and the like, the following resins (1) to (4-5) were used as raw materials for the respective layers of the multilayer film. Representative physical properties or trade names are shown.

(1) Polybutylene Terephthalate

Resin (1-1): NOVADURAN (registered trademark) 5505S (manufactured by Mitsubishi Chemical Corporation)

(2) Cyclic Olefin-Based Polymer

Resin (2-1): APEL (registered trademark) 6011T (glass transition temperature: 105°C, manufactured by Mitsui Chemicals, Inc.)

Resin (2-2): TOPAS (registered trademark) 5013S-4 (glass transition temperature: 134°C, manufactured by TOPAS

ADVANCED POLYMERS GmbH)

(3) Ethylene-Based Resin Composition

Resin (3-1): Ethylene-based resin composition prepared by mixing 20 parts by mass of high-density polyethylene (ethylene homopolymer) and 80 parts by mass of an ethylene-α-olefin copolymer (linear low-density polyethylene) so that:

the density was 912 kg/$m^3$,
the melt flow rate (190°C, load: 2.16 kg) was 0.5 g/10 min, and
the amount of melted component (Ht) was 71% when t = 107°C, 79% when t = 121°C, and 95% when t = 127°C.

(4) Polyolefins

Resin (4-1): Polyethylene (density: 937 kg/$m^3$, MFR (190°C, load: 2.16 kg): 2 g/10 min)
Resin (4-2): Polyethylene (density: 957 kg/$m^3$, MFR (190°C, load: 2.16 kg): 1 g/10 min)
Resin (4-3): Polyethylene (density: 959 kg/$m^3$, MFR (190°C, load: 2.16 kg): 15 g/10 min)
Resin (4-4): Polypropylene (MFR (230°C, load: 2.16 kg): 4 g/10 min)
Resin (4-5): Polyethylene (density: 900 kg/$m^3$, MFR (190°C, load: 2.16 kg): 0.4 g/10 min)

<Production of Multilayer Film and Liquid Agent Container>

[Examples 1 to 3]

(1. Production of Multilayer Film)

Multilayer films each having a configuration in which a first layer, a second layer, a third layer, a fourth layer, and a fifth layer shown in Table 1 were laminated in this order were produced by five-layer co-extrusion water-cooling inflation forming.

Table 1

| | | Example 1 | Example 2 | Example 3 |
|---|---|---|---|---|
| First layer | Constituent material (mass%) | | | |
| | Resin (1-1) | 100 | 100 | 100 |
| | Thickness | 5 μm | 5 μm | 5 μm |
| Second layer | Constituent material (mass%) | | | |
| | Resin (3-1) | 100 | 100 | 100 |
| | Thickness | 50 μm | 50 μm | 50 μm |
| Third layer | Constituent material (mass%) | | | |
| | Resin (2-1) | 60 | 60 | |
| | Resin (2-2) | | | 60 |
| | Resin (4-2) | 40 | 40 | 26 |
| | Resin (4-5) | | | 14 |
| | Thickness | 10 μm | 10 μm | 10 μm |
| Fourth layer | Constituent material (mass% ) | | | |
| | Resin (3-1) | 100 | 100 | 100 |
| | Thickness | 75 μm | 65 μm | 75 μm |

(continued)

| | | Example 1 | Example 2 | Example 3 |
|---|---|---|---|---|
| Fifth layer | Constituent material (mass% ) | | | |
| | Resin (4-1) | 34 | 34 | 34 |
| | Resin (4-2) | 34 | 34 | 34 |
| | Resin (4-3) | 17 | 17 | 17 |
| | Resin (4-4) | 15 | 15 | 15 |
| | Thickness | 10 μm | 20 μm | 10 μm |

(2. Production of Liquid Agent Container)

The obtained multilayer films were each cut into a size of 15 cm ×14 cm, two sheets were superposed with the fifth layers facing inward, and peripheral edges were heat-sealed with a width of 5 mm, thereby producing a liquid agent container.

<Evaluation of Liquid Agent Container>

(1. Amount of Eluted Component)

150 mL of a liquid agent containing 15 g/L of soybean oil, 70 g/L of glucose, and further amino acid(s), electrolyte(s), and vitamin(s) was sealed in the liquid agent container produced in each of Examples or the like, and high-pressure steam sterilization was performed at 121°C. Thereafter, the sample was stored for 2 weeks under the condition of 60°C and 75%RH. After the storage, an eluate (shown in Table 3) from polybutylene terephthalate was confirmed by liquid chromatography (the conditions were as follows).

Liquid Chromatography Measurement Conditions:

10 mL of an extract is accurately measured, 1 g of sodium chloride, 10 mL of acetonitrile, and 4 g of magnesium sulfate are added, the mixture is vigorously shaken for 1 minute, centrifugation is performed at 2,000 rotations per minute for 5 minutes, and then an upper layer is fractionated into an eggplant-shaped flask. 10 mL of acetonitrile is added to the remaining lower layer, the mixture is vigorously shaken for 1 minute, centrifugation is performed at 2,000 rotations per minute for 5 minutes, an upper layer is combined with the previous upper layer, and then distillation is performed under reduced pressure at 40°C ± 10°C. A water/acetonitrile mixed solution (1:1) is added to the residue to make the solution exactly 10 mL, and this solution is used as a sample solution. Separately, 10 mg of PBT-CD (see Tables 3 and 4) is accurately measured, and acetone is added to dissolve PBT-CD so as to make the solution exactly 100 mL. 10 mL of the solution is accurately measured, acetonitrile is added to make the solution exactly 100 mL, and the solution is used as a standard stock solution. 5 mL of each standard stock solution is accurately weighed, and acetonitrile is added to make the solution exactly 50 mL. 4 mL of the solution is accurately measured, a 5 mM ammonium acetate buffer solution (pH 3.0) is added to make the solution exactly 50 mL, and the solution is used as a standard solution. 100 μL of each of the standard solution and the sample solution is accurately measured, and a test is performed by liquid chromatography under the following conditions to measure peak areas $A_t$ and $A_s$ of the eluate in each solution. The concentration (μg/L) of PBT-CD in the liquid agent is calculated by the following equation.

$$\text{Concentration } (\mu g/L) \text{ of PBT-CD in Liquid Agent} = (M/10) \times (A_t/A_s) \times 0.08 \times C \times 1{,}000$$

M: Weighed amount (mg) of PBT-CD
As: Peak area of PBT-CD in standard solution
At: Peak area of PBT-CD in sample solution
C: Correction coefficient: 10/7

Test Conditions:

Detector: Ultraviolet absorptiometer (measurement wavelength: 260 nm)
Column: A stainless steel tube having an inner diameter of 4.6 mm and a length of 15 cm was filled with 5 um of octadecylsilylated silica gel for liquid chromatography (ZORBAX SB-C18, 4.6 mmID × 150 mm, 5 μm, manufactured by Agilent Technologies, Inc.)
Column temperature: Constant temperature around 40°C
Mobile phase A: 5 mM ammonium acetate buffer solution (pH 3.0)
Mobile phase B: Acetonitrile
Feeding of mobile phase: Concentration gradient control by changing a mixing ratio of the mobile phase A and the mobile phase B as follows:

Table 2

| Time after injection (min) | Mobile phase A (%) | Mobile phase B (%) |
|---|---|---|
| 0 | 85 | 15 |
| 1 | 85 | 15 |
| 43 | 0 | 100 |
| 73 | 0 | 100 |
| 80 | 85 | 15 |
| 90 | 85 | 15 |

Flow rate: 1.5 mL/min

Table 3

| Eluate name | TDI (Tolerable daily intake) |
|---|---|
| PBT-CD | 75 (μg/L) |
| PBT-CE pentamer | 75 (μg/L) |
| PBT-CE hexamer | 75 (μg/L) |
| PBT-CE heptamer | 75 (μg/L) |
| PBT-CE octamer | 75 (μg/L) |
| PBT-CE nonamer | 75 (μg/L) |
| * Description of Abbreviation | |

Table 4

| Eluate name | Structural formula |
|---|---|
| PBT-CD | 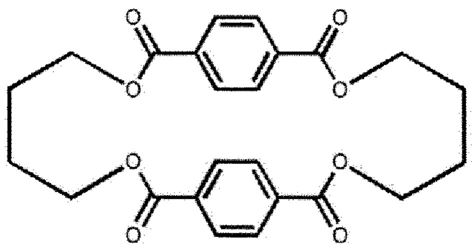 |

(continued)

| Eluate name | Structural formula |
|---|---|
| PBT-CE pentamer | 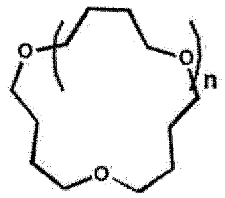 Each n is an integer of 3 to 7 |
| PBT-CE hexamer | |
| PBT-CE heptamer | |
| PBT-CE octamer | |
| PBT-CE nonamer | |

The results are shown in Table 5.

Table 5 Amount of eluate (unit: pg/L)

| Eluate name | Example 1 | Example 2 | Example 3 |
|---|---|---|---|
| PBT-CD | 0 | 0 | 0 |
| PBT-CE pentamer | 0 | 0 | 0 |
| PBT-CE hexamer | 0 | 0 | 0 |
| PBT-CE heptamer | 0 | 0 | 0 |
| PBT-CE octamer | 0 | 0 | 0 |
| PBT-CE nonamer | 0 | 0 | 0 |
| "0" represents that the amount of eluate is less than 0.1 pg/L. | | | |

In all of Examples 1 to 3, elution of the eluate derived from polybutylene terephthalate into the liquid agent was prevented.

(2. Heat Resistance, Transparency, and Impact Resistance)

Heat resistance:

The multilayer film obtained in each of Examples was cut into a size of 20 cm × 28 cm, two sheets were superposed with the fifth layers facing inward, and peripheral edges were heat-sealed with a width of 5 mm, thereby producing a liquid agent container. 1,000 mL of distilled water was sealed in the obtained liquid agent container and treated by high-pressure steam sterilization at 121°C for 15 minutes, the presence or absence and degree of occurrence of wrinkles were visually observed at four corners of the liquid agent container, and then heat resistance was evaluated according to the following criteria based on the observation results.

AA: No wrinkles are observed
BB: No remarkable wrinkles are observed (slight wrinkles are observed)
CC: Remarkable wrinkles are observed

Transparency:

1,000 mL of distilled water was sealed in a liquid agent container prepared in the same manner as in the heat resistance test, a high-pressure steam sterilization treatment was performed at 121°C for 15 minutes, the multilayer film in a portion in contact with the solvent was cut off from the liquid agent container to prepare a sample piece, a light transmittance (%) in water at 450 nm was measured for the sample piece using an ultraviolet-visible spectrophotometer, and transparency was evaluated according to the following criteria based on the measurement results.

AA: The light transmittance in water is 70% or more
BB: The light transmittance in water is 65% or more and less than 70%
CC: The light transmittance in water is less than 65%

Impact Resistance:

1,000 mL of distilled water was sealed in a liquid agent container prepared in the same manner as in the heat resistance test, a high-pressure steam sterilization treatment was performed at 121°C for 15 minutes, and then the liquid agent container was stored under a temperature condition of 0°C for 48 hours or longer. Thereafter, the liquid agent container was set on a flat workbench, and an iron plate (width 30 cm and length 32 cm) having a weight of 6.4 kg was horizontally dropped from a height of 50 cm above the liquid agent container, and impact resistance was evaluated according to the following criteria.

BB: No bag breakage occurred.
CC: Bag breakage occurred.

The results are shown in Table 6.

Table 6

| | Example 1 | Example 2 | Example 3 |
|---|---|---|---|
| Heat resistance | AA | AA | BB |
| Transparency | AA | BB | AA |
| Impact resistance | BB | BB | BB |

<Production of Multilayer Film and Liquid Agent Container>

[Example 4 and Comparative Example 1]

(1. Production of Multilayer Film)

A multilayer film having a configuration in which a first layer, a second layer, a third layer, a fourth layer, and a fifth layer shown in Table 7 were laminated in this order was produced by five-layer co-extrusion water-cooling inflation forming (Example 4). In addition, a multilayer film having a configuration in which a first layer, a second layer, and a fifth layer were laminated in this order was produced by three-layer co-extrusion water-cooling inflation forming (Comparative Example 1).

Table 7

| | | Example 4 | Comparative Example 1 |
|---|---|---|---|
| First layer | Constituent material (mass%)<br>Resin (1-1) | <br>100 | <br>100 |
| | Thickness | 5 μm | 5 μm |
| Second layer | Constituent material (mass%)<br>Resin (3-1) | <br>100 | <br>100 |
| | Thickness | 45 μm | 135 μm |
| Third layer | Constituent material (mass%)<br>Resin (2-1)<br>Resin (4-2)<br>Resin (4-5) | <br>60<br>22<br>18 | |
| | Thickness | 10 μm | |
| Fourth layer | Constituent material (mass%)<br>Resin (3-1) | <br>100 | |
| | Thickness | 80 μm | |

(continued)

| | | Example 4 | Comparative Example 1 |
|---|---|---|---|
| Fifth layer | Constituent material (mass%) | | |
| | Resin (4-1) | 43 | 43 |
| | Resin (4-2) | 27 | 27 |
| | Resin (4-3) | 15 | 15 |
| | Resin (4-4) | 15 | 15 |
| | Thickness | 10 μm | 10 μm |

(2. Production of Liquid Agent Container)

The obtained multilayer film was cut into a size of 15 cm ×14 cm, two sheets were superposed with the sixth layers facing inward, and peripheral edges were heat-sealed with a width of 5 mm, thereby producing a liquid agent container.

<Evaluation of Liquid Agent Container>

(Amount of Eluted Component)

In the liquid agent container produced in each of Examples and the like, 150 mL of each of (1) water, (2) a liquid agent (pH 8.5 buffer solution) whose pH was set to 8.5 obtained by weighing 1.33 g of ammonium chloride, dissolving it in 1,000 mL of water and adding ammonia water (28%) dropwise little by little, or (3) a liquid agent (pH 3.5 buffer solution) whose pH was set to 3.5 obtained by weighing 1.58 g of ammonium formate, dissolving it in 1,000 mL of water and adding formic acid was sealed, and high-pressure steam sterilization was performed at 121°C. Thereafter, the sample was stored for 2 weeks under the condition of 60°C and 75%RH. After the storage, an eluate (shown in Table 8) from polybutylene terephthalate was confirmed by liquid chromatography (the conditions were the same as in Examples 1 to 3).

Table 8

| Eluate name | Structural formula |
|---|---|
| PBT-CD | 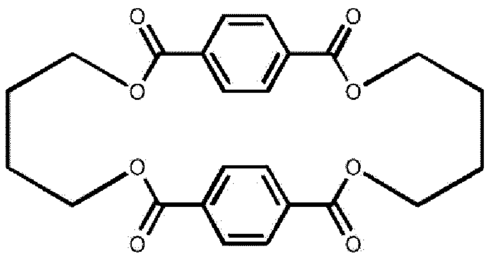 |
| PBT-1 | 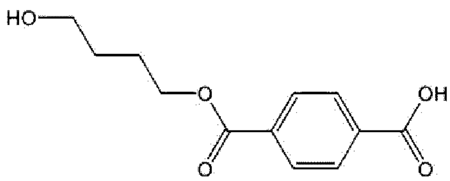 |
| PBT-2 | 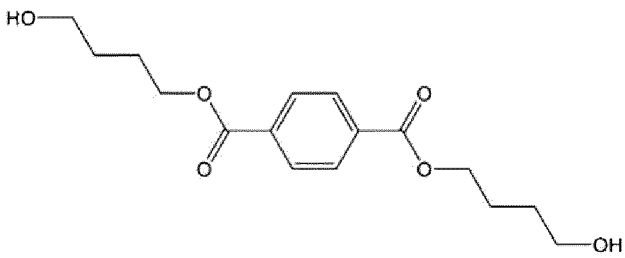 |

(continued)

| Eluate name | Structural formula |
|---|---|
| Terephthalic acid | 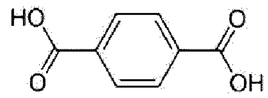 |

The results are shown in Table 9.

Table 9 Amount of eluate (unit: pg/L)

| Eluate name | Example 4 | | | Comparative Example 1 | | |
|---|---|---|---|---|---|---|
| | Water | pH 8.5 buffer solution | pH 3.5 buffer solution | Water | pH 8.5 buffer solution | pH 3.5 buffer solution |
| PBT-CD | 0 | 0 | 0 | 64.0 | 110.9 | 349.8 |
| PBT-1 | 0 | 0 | 0 | 72.9 | 58.5 | 13.3 |
| PBT-2 | 0 | 0 | 0 | 238.9 | 246.0 | 182.8 |
| Terephthalic acid | 0 | 0 | 0 | 0 | 0 | 156.6 |
| "0" represents that the amount of eluate is less than 0.1 pg/L. | | | | | | |

Compared to Comparative Example 1, in Example 4, elution of the eluate derived from polybutylene terephthalate into the liquid agent was prevented.

## Claims

1. A multilayer film comprising at least:

    a layer (1) comprising polybutylene terephthalate,
    a layer (2) comprising a cyclic olefin-based polymer,
    a flexible layer (3) comprising an ethylene-based resin, and
    a layer (4) comprising a polyolefin, which are laminated,

    wherein the layer (1), the layer (2), and the layer (4) forming one surface of the multilayer film are laminated in this order.

2. The multilayer film according to claim 1, wherein the cyclic olefin-based polymer has a glass transition temperature of 80 to 145°C.

3. The multilayer film according to claim 1 or 2, wherein the cyclic olefin-based polymer has a structural unit represented by the following General Formula (2):

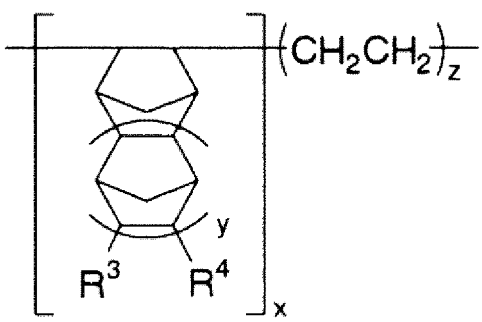

··· (2)

wherein in Formula (2), $R^3$ and $R^4$ are each independently a hydrogen atom or a hydrocarbon group having 1 to 5 carbon atoms, and may be bonded to each other to form a ring,
x is an integer of 1 or more, y is an integer of 0 or 1 or more, and z is an integer of 1 or more.

**4.** The multilayer film according to any one of claims 1 to 3, wherein in an endothermic curve obtained by differential scanning calorimetry of the ethylene-based resin, the following requirements [a], [b], and [c] are satisfied:

[a]: when t = 107°C, Ht = 55 to 75%,
[b]: when t = 121°C, Ht = 65 to 80%, and
[c]: when t = 127°C, Ht = 70 to 95%,

wherein in [a], [b], and [c], Ht is the amount of melted component calculated by an equation: Ht = ht/ΔHm by determining the total heat of fusion (ΔHm) and a heat of fusion (ht) observed from the melting start temperature to t°C from the endothermic curve observed at the second temperature increase by heating the ethylene-based resin from -20°C to 230°C at a temperature increasing rate of 10°C/min in a nitrogen atmosphere and holding the ethylene-based resin at this temperature for 10 minutes, cooling the ethylene-based resin to 30°C at a temperature decreasing rate of 10°C/min and holding the ethylene-based resin at this temperature for 1 minute, and then, heating the ethylene-based resin to 230°C at a temperature increasing rate of 10°C/min by a differential scanning calorimeter.

**5.** The multilayer film according to any one of claims 1 to 4, wherein the ethylene-based resin has a melt flow rate (190°C, load: 2.16 kg) of 0.01 to 10 g/10 min.

**6.** The multilayer film according to any one of claims 1 to 5, wherein the polyolefin satisfies the following requirements [d] and [e]:

requirement [d]: the density is 0.900 to 0.960 $kg/cm^3$, and
requirement [e]: the melt flow rate (190°C, load: 2.16 kg) is 0.1 to 10 g/10 min.

**7.** The multilayer film according to any one of claims 1 to 6, wherein the polyolefin is a mixture of polyethylene and polypropylene.

**8.** The multilayer film according to any one of claims 1 to 7, wherein the layer (1), the layer (3), the layer (2), the layer (3), and the layer (4) are laminated in this order.

**9.** A liquid agent container formed of the multilayer film according to any one of claims 1 to 8 so that the layer (4) is formed as the innermost layer.

**INTERNATIONAL SEARCH REPORT**

International application No.
**PCT/JP2022/016065**

**A. CLASSIFICATION OF SUBJECT MATTER**

***B32B 27/32***(2006.01)i; ***B32B 27/00***(2006.01)i; ***B32B 27/36***(2006.01)i; ***B65D 65/40***(2006.01)i
FI: B32B27/32 C; B32B27/36; B65D65/40 D; B32B27/00 A

According to International Patent Classification (IPC) or to both national classification and IPC

**B. FIELDS SEARCHED**

Minimum documentation searched (classification system followed by classification symbols)

B32B27/00-27/36; B65D65/40; A61J1/10-1/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 4887343 B2 (C I KASEI CO., LTD.) 29 February 2012 (2012-02-29) claims, paragraphs [0001]-[0022], [0033]-[0036], fig. 1, 2 | 1-3 |
| X | JP 5100308 B2 (OTSUKA PHARMACEUT FACTORY INC.) 19 December 2012 (2012-12-19) claims, paragraphs [0028]-[0038], [0101], [0112], [0113], [0121], fig. 1 | 1, 2, 7, 9 |
| Y | WO 2006/043459 A1 (OTSUKA PHARMACEUT FACTORY INC.) 27 April 2006 (2006-04-27) claims, paragraphs [0001]-[0048], [0061]-[0080], fig. 1-3 | 1-9 |
| Y | WO 2006/134645 A1 (FUJIMORI KOGYO CO., LTD.) 21 December 2006 (2006-12-21) claims, paragraphs [0001]-[0078], fig. 2-4 | 1-9 |
| Y | JP 2002-219786 A (MITSUBISHI ENGINEERING PLASTICS CORP.) 06 August 2002 (2002-08-06) claims, paragraphs [0001]-[0065] | 1-9 |
| Y | WO 2012/008007 A1 (SHIKOKU KAKO KK) 19 January 2012 (2012-01-19) claims, paragraphs [0008]-[0022], [0027]-[0031] | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 May 2022** | **28 June 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/016065**

**C. DOCUMENTS CONSIDERED TO BE RELEVANT**

| Category* | Citation of document, with indication, where appropriate, of the relevant passages | Relevant to claim No. |
|---|---|---|
| Y | JP 2006-217975 A (OTSUKA PHARMACEUT FACTORY INC.) 24 August 2006 (2006-08-24)<br>claims, paragraphs [0007]-[0020], [0032]-[0041] | 1-9 |
| Y | WO 2019/021759 A1 (TOYOBO CO., LTD.) 31 January 2019 (2019-01-31)<br>paragraphs [0001]-[0010], [0023] | 1-9 |
| A | JP 2011-110369 A (KYORAKU CO., LTD.) 09 June 2011 (2011-06-09)<br>entire text | 1-9 |
| A | JP 8-309939 A (NIPPON PETROCHEMICALS CO., LTD.) 26 November 1996 (1996-11-26)<br>entire text | 1-9 |
| A | JP 2012-250487 A (DAINIPPON PRINTING CO., LTD.) 20 December 2012 (2012-12-20)<br>entire text | 1-9 |
| A | EP 2784120 A1 (MITSUBISHI GAS CHEMICAL COMPANY, INC.) 01 October 2014 (2014-10-01)<br>entire text | 1-9 |
| A | JP 2018-172554 A (MITSUI CHEMICALS INC.) 08 November 2018 (2018-11-08)<br>entire text | 1-9 |

Form PCT/ISA/210 (second sheet) (January 2015)

**INTERNATIONAL SEARCH REPORT**
**Information on patent family members**

International application No.
**PCT/JP2022/016065**

| Patent document cited in search report | Publication date (day/month/year) | Patent family member(s) | Publication date (day/month/year) |
|---|---|---|---|
| JP 4887343 B2 | 29 February 2012 | (Family: none) | |
| JP 5100308 B2 | 19 December 2012 | US 2010/0092446 A1<br>claims, paragraphs [0147]-[0164], [0256]-[0266], [0285]-[0287], table 2, fig. 1<br>WO 2008/050837 A1<br>EP 2080501 A1<br>CA 2667343 A<br>KR 10-2009-0074802 A<br>CN 101563057 A<br>AU 2007309987 A<br>TW 200826922 A<br>SG 175625 A | |
| WO 2006/043459 A1 | 27 April 2006 | US 2008/0063825 A1<br>claims, paragraphs [0001]-[0095], [0119]-[0164], fig. 1-3<br>EP 1803552 A1<br>CA 2583807 A<br>CN 101044021 A<br>AU 2005297712 A<br>HK 1107058 A<br>KR 10-2007-0085296 A<br>TW 200626126 A<br>MY 139251 A | |
| WO 2006/134645 A1 | 21 December 2006 | US 2009/0310890 A1<br>claims, paragraphs [0001]-[0125], fig. 2-4<br>EP 1894851 A1<br>CN 101238046 A<br>KR 10-2008-0023248 A | |
| JP 2002-219786 A | 06 August 2002 | US 2002/0142115 A1<br>claims, paragraphs [0001]-[0123] | |
| WO 2012/008007 A1 | 19 January 2012 | SG 177232 A | |
| JP 2006-217975 A | 24 August 2006 | (Family: none) | |
| WO 2019/021759 A1 | 31 January 2019 | US 2020/0156359 A1<br>paragraphs [0001]-[0015], [0041]<br>TW 201910129 A<br>KR 10-2020-0035412 A<br>JP 2018-20844 A<br>EP 3659939 A1<br>CN 110944918 A<br>BR 112020001548 A | |
| JP 2011-110369 A | 09 June 2011 | (Family: none) | |
| JP 8-309939 A | 26 November 1996 | (Family: none) | |
| JP 2012-250487 A | 20 December 2012 | (Family: none) | |
| EP 2784120 A1 | 01 October 2014 | US 2014/0308405 A1<br>TW 201336925 A<br>KR 10-2014-0103923 A<br>JP 2014-88493 A | |

Form PCT/ISA/210 (patent family annex) (January 2015)

**INTERNATIONAL SEARCH REPORT**
**Information on patent family members**

International application No.
**PCT/JP2022/016065**

| Patent document cited in search report | Publication date (day/month/year) | Patent family member(s) | Publication date (day/month/year) |
|---|---|---|---|
| | | JP 2014-88492 A | |
| | | JP 2014-87971 A | |
| | | JP 2014-87970 A | |
| | | JP 2014-87263 A | |
| | | JP 2014-84154 A | |
| | | JP 2014-84150 A | |
| | | JP 2014-83785 A | |
| | | JP 2014-83251 A | |
| | | JP 2014-82948 A | |
| | | JP 2014-82942 A | |
| | | JP 2014-82941 A | |
| | | JP 2014-80209 A | |
| | | JP 2014-79937 A | |
| | | JP 2014-79926 A | |
| | | JP 2014-76820 A | |
| | | JP 2014-73869 A | |
| | | JP 2013-129817 A | |
| | | IN 4745CHN2014 A | |
| | | CN 103958604 A | |
| JP 2018-172554 A | 08 November 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 20128007 A
- JP 2002301796 A
- JP 2008253478 A
- JP 2013081494 A